(19) Europäisches Patentamt
European Patent Office
Office européen des brevets

(11) Publication number: **0 384 401 A1**

(12) **EUROPEAN PATENT APPLICATION**

(21) Application number: **90103249.0**

(22) Date of filing: **20.02.90**

(51) Int. Cl.5: **C09J 183/04, C09D 183/04, C08L 83/04, B32B 7/12**

(30) Priority: **21.02.89 JP 41458/89**

(43) Date of publication of application: **29.08.90 Bulletin 90/35**

(84) Designated Contracting States: **BE DE FR GB**

(71) Applicant: **DOW CORNING TORAY SILICONE COMPANY, LTD.**
**2-3-16, Muro-machi Nihonbashi Chuo-ku**
**Tokyo 103(JP)**

(72) Inventor: **Suganuma, Noriyuki**
**1,6-chome, Yushudai**
**Ichihara-shi, Chiba(JP)**

(74) Representative: **Spott, Gottfried, Dr.**
**Patentanwälte Spott und Puschmann**
**Sendlinger-Tor-Platz 11**
**D-8000 München 2(DE)**

(54) **Primer compositions.**

(57) Primer compositions for adhering room temperature vulcanizing silicone rubber to various adherends is an organopolysiloxane resin having the average unit formula of

$R^1_aSiO_{(4-a-b)/2}(OR^2)_b$

an amino group-containing silane of the general formula

$$R^3\overset{R^1_c}{\overset{|}{Si}}X_{3-c}$$

an organotitanate ester and organic solvent. These primer compositions can be used to make articles which have room temperature vulcanized silicone rubber bonded to an adherend such as metal and glass through a primer layer which exhibit resistance to exfoliation when immersed in water.

EP 0 384 401 A1

## PRIMER COMPOSITIONS

The present invention relates to a primer composition, and, more particularly, relates to a primer composition optimized for the bonding of room temperature-curable silicone rubber to various adherends such as glass, metal, and the like.

Primer compositions based on organofunctional silanes or their reaction products or partial hydrolysis condensates are known for the bonding of room temperature-curable silicone rubbers to various adherends such as glass, metal, plastics, and the like. For example, the following have been disclosed: a composition consisting of mercapto group-containing silane, amino group-containing silane, and trialkoxysilane different from the preceding two silanes described in Japanese Patent Publication Number 55-27118 (27,118/80) Kokai No. 78/00232 published January 5, 1978, in the name of Imai et al and assigned to Toray Silicone Co., Ltd.; a composition consisting of mercapto group-containing silane and titanate ester described in U.S. Patent No. 4,059,473, issued November 22, 1977 to Okami and equivalent to Japanese Patent Application Laid Open [Kokai] Number 51-139831 (139,831/76) published December 2, 1976, assigned to Shin-Etsu Chemical Industry Co., Ltd.; a composition consisting of hydroxyl group-containing organopolysiloxane and amino group-containing silane (refer to Japanese Patent Publication Number 61-57867 (57,867/86) Kokai No. 80/62,960 published May 12, 1980 and assigned to Toshiba Silicone Co., Ltd. ; and a composition consisting of organopolysiloxane resin, amino group-containing silane, and methacryloxypropyl group-containing silane described in Japanese Patent Publication Number 63-20462 (20,462/88) Kokai No. 85/124,652 published July 3, 1985 and assigned to Toshiba Silicone Co., Ltd.

However, these primer compositions are each limited with respect to the particular adherends with which bonding is possible. As a consequence, when different adherends are to be bonded together, it is then necessary separately to apply two or more different types of primer compositions to the corresponding adherends. Furthermore, even when bonding is apparently achieved, its durability is poor, and in particular the adherence declines upon long-term exposure to water. Peeling at the interface with the adherend is even noted in extreme cases.

The present invention solves the aforementioned problems associated with the prior art, and comprises a primer composition adapted for the bonding or adhesion of room temperature-curable silicone rubbers to a wide range of adherends. In addition, the present invention takes as its object the introduction of a primer composition which achieves a strongly water-resistant adhesion.

The present invention relates to a primer composition (A) 100 weight parts organopolysiloxane resin containing silicon-bonded hydroxyl or alkoxy, as represented by the following average unit formula

$R^1_aSiO_{(4-a-b)/2}(OR^2)_b$

wherein $R^1$ is a monovalent hydrocarbon group, $R^2$ is the hydrogen atom or an alkyl group, $\underline{a}$ = 0.8 to 1.8, and $\underline{b}$ has a value such that each molecule contains at least one silicon-bonded hydroxyl group or alkoxy group, (B) 20 to 400 weight parts amino group-containing silane as represented by the following general formula

$$\begin{array}{c} R^1_c \\ | \\ R^3SiX_{3-c} \end{array}$$

wherein $R^3$ is a monovalent hydrocarbon group containing at least one amino group, $R^1$ is as defined above, X represents a hydrolyzable group, and $\underline{c}$ is 1 or 2, or partial hydrolyzate thereof, (C) 20 to 400 weight parts organotitanate ester, and (D) a quantity of organic solvent.

This invention also relates to an article comprising an adherend with a surface having bonded thereto an air dried primer layer obtained from the primer composition described above and having bonded to the air dried primer layer a layer of cured room temperature vulcanizable silicone rubber.

The organopolysiloxane resin comprising component (A) used by the present invention is the core or base component of the primer composition of the present invention. The presence in each molecule of at least one hydroxyl group or alkoxy group is essential in order to impart adhesiveness, and particularly a water-resistant adhesiveness, to the primer composition of the present invention. $R^1$ in the above formula for component (A) is illustrated by a substituted or unsubstituted monovalent hydrocarbon group as exemplified by alkyl groups such as methyl, ethyl, and propyl; alkenyl groups such as vinyl and allyl; aryl groups such as phenyl and tolyl; and the preceding in which hydrogen has replaced by, for example, a halogen atom

and the cyano group. $R^2$ represents the hydrogen atom or an alkyl group as exemplified by methyl, ethyl, and propyl, and a has a value of 0.8 to 1.8. b is a value such that at least one silicon-bonded hydroxyl group or alkoxy group is present in each molecule. This hydroxyl group-containing or alkoxy group-containing organopolysiloxane can generally be obtained by the hydrolysis, in the presence of water or a water/organic solvent mixture of two or more kinds of chlorosilane or alkoxysilane in which the mixture of silanes has from 0.8 to 1.8 monovalent hydrocarbon groups per silicon atom, followed by removal of the hydrochloric acid, alcohol, and other by-products. $R^1$ and $R^2$ are preferably methyl. The preferred hydroxyl and methoxy content for (A) is from 0.1 to 5 weight percent.

The amino group-containing silane or partial hydrolyzate thereof, component (B), used by the present invention serves to equip the primer composition with adhesiveness for a wide range of adherends. $R^1$ in the following formula for component (B) is the same as described above for component (A). $R^3$ is a monovalent hydrocarbon group having at least one amino group, and is exemplified by aminomethyl, beta-aminoethyl, gamma-aminopropyl, gamma-(2-aminoethyl)aminopropyl, and gamma-(2-(2-aminoethyl)-aminoethyl)aminopropyl. X is a hydrolyzable group, and is exemplified by alkoxy groups such as methoxy, and ethoxy; the amino group; and the oxime group. Examples of component (B) are
aminomethyltrimethoxysilane,
aminomethyltriethoxysilane,
gamma-aminopropyltrimethoxysilane,
gamma-aminopropyltriethoxysilane,
gamma-aminopropyltrioximesilane,
gamma-aminopropyltriaminoxysilane, and
gamma-(2-aminoethyl)aminopropyltrimethoxysilane.
The same effects can also be obtained by use of the partial hydrolyzates of these silanes. Component (B) is suitably added within the range of 20 to 400 weight parts per 100 weight parts component (A), preferably in amounts of from 50 to 250 weight parts per 100 weight parts of component (A).

The organotitanate ester, component (C), used by the present invention functions as a catalyst which imparts an air-drying curability to the primer composition, and also serves to impart adhesiveness to this primer composition. Examples of component (C) are as follows: tetraisopropyl titanate, tetra-n-butyl titanate, tetra(2-ethylhexyl) titanate, and the partial hydrolysis condensates of the preceding; as well as titanium chelate compounds such as titanium diisopropylbis(acetyl-acetate), and titanium diisopropylbis(ethyl acetoacetate). The component under consideration is suitably added at 20 to 400 weight parts per 100 weight parts component (A), preferably from 50 to 250 weight parts per 100 weight parts component (A).

The organic solvent, component (D), used by the present invention serves to dissolve the primer composition, and it is selected based on a consideration of its capacity to dissolve components (A) through (C), its ability to provide a wettability suitable to the primer coating process, and its evaporability. Examples of this organic solvent are benzene, toluene, xylene, hexane, heptane, trichloroethylene, perchloroethylene, methanol, ethanol, isopropanol, and butanol. This organic solvent may take the form of a single solvent or the mixture of two or more of the preceding. While such an organic solvent is not necessarily required in those cases in which the viscosity of the mixture of components (A) through (C) falls within a range of viscosities at which this mixture can be satisfactorily used as a primer composition, in many cases it will be more advantageous to dissolve the composition of the present invention and adjust to a concentration and viscosity optimized for execution of a primer coating process. Accordingly, the quantity of addition of the organic solvent is not specifically restricted, and it may be added in arbitrary quantities, however a preferred range of organic solvent is from 2000 to 5000 weight parts per 100 weight parts of component (A).

The primer composition of the present invention can be easily prepared simply by mixing components (A) through (D) to homogeneity. However, in addition to the preceding, the following, for example, can be added as appropriate within a range which does not hinder the object of the present invention: other alkoxy group-containing silanes; inorganic filler such as fumed silica, colloidal silica, and the like; known colorants such as red iron oxide, titanium oxide, carbon black, and the like.

The present invention is explained in greater detail in the following based on illustrative examples. In these examples, parts = weight parts, and Me represents the methyl group.

## EXAMPLE 1

Using a 50% toluene solution of an organopolysiloxane resin (hydroxyl group content = 1 weight%) constituted of 85 mole% $MeSiO_{3/2}$ units and 15 mole% $Me_2SiO$ units, primer compositions 1 to 4 and

comparison primer compositions 5 to 7 were prepared by mixing the ingredients reported in Table 1. These compositions were each coated on adherends of fluororesin-coated steel plate (Duranar from Nippon Paint Company, Limited), stainless steel plate (SUS 304), and electrodeposition-coated aluminum plate, followed by air-drying for 30 minutes at room temperature to provide a primer layer. A room temperature-curing aminoxy-type low-modulus silicone sealant (SE792 from Toray Silicone Company, Limited) was coated on these primer-coated surfaces (the primer layer) and cured for 7 days at 20 °C and then 7 days at 50 °C. The tensile adhesion of the obtained test specimens was measured as stipulated in JIS A 5758. In addition, test specimens were also immersed in hot water at 50 °C for 30 days and were then subjected to the same tensile adhesion measurement. These results were as respectively reported in Table 2 as the initial adhesion and the water-resistant adhesion.

## EXAMPLE 2

Using a 60 weight% xylene solution of an organopolysiloxane resin (methoxy group content = 2 weight%) constituted of 47 mole% $Me_3SiO_{1/2}$ units and 53 mole% $SiO_2$ units, primer compositions 8 through 11 and comparison primer compositions 12 through 14 were prepared by mixing the ingredients as reported in Table 3. These compositions were coated on adherends of fluororesin-coated steel plate (Duranar from Nippon Paint Company, Limited) and the sputtered surface of heat-reflective glass and were then air-dried for 30 minutes at room temperature to provide a primer layer. Test specimens were prepared as in Example 1 by coating with a room temperature-curing aminoxy-type low-modulus silicone sealant (SE796 from Toray Silicone Company, Limited). These test specimens were measured for their initial adhesion and water-resistant adhesion as in Example 1, and these results were as reported in Table 4.

Because the primer composition of the present invention consists of components (A) through (D), and in particular because it contains the hydroxyl-containing or alkoxy-containing organopolysiloxane resin of component (A) and the organotitanate ester of component (C), it characteristically can adhere room temperature-curable silicone rubbers to a wide range of adherends while developing an adhesion which has an excellent resistance to water.

TABLE I

| | Composition Number | | | | | | |
|---|---|---|---|---|---|---|---|
| | Present Invention | | | | Comparison Examples | | |
| Components | 1 | 2 | 3 | 4 | 5 | 6 | 7 |
| Polysiloxane resin solution (parts) | 5 | 5 | 5 | 5 | - | 5 | - |
| N-(2-aminoethyl)-3-aminopropyl trimethoxysilane (parts) | 5 | 2 | 5 | 5 | 5 | 5 | 5 |
| Methyltrimethoxysilane (parts) | - | - | - | 5 | - | - | 5 |
| Tetraisopropyl titanate (parts) | 5 | 5 | 2 | 5 | 5 | - | 5 |
| Isopropyl alcohol (parts) | 40 | 40 | 40 | 40 | 40 | 40 | 40 |
| N-hexane (parts) | 45 | 48 | 48 | 40 | 50 | 50 | 45 |

TABLE II

| Adherend | | Composition Number 1 | 2 | 3 | 4 | 5 | 6 | 7 |
|---|---|---|---|---|---|---|---|---|
| Fluororesin-coated steel plate | Initial adhesion | + | + | + | + | + | + | + |
| | Water-resistant adhesion | + | + | + | + | x | x | Δ |
| Stainless steel plate | Initial adhesion | + | + | + | + | + | + | + |
| | Water-resistant adhesion | + | + | + | + | x | x | + |
| Aluminum plate | Initial adhesion | + | + | + | + | Δ | Δ | + |
| | Water-resistant adhesion | + | + | + | + | x | x | x |

+ : Complete adhesion
Δ : Partial exfoliation or peeling
x : Peeling over entire surface

TABLE III

| | Composition Number: Present Invention | | | | Comparison Examples | | |
|---|---|---|---|---|---|---|---|
| Components | 8 | 9 | 10 | 11 | 12 | 13 | 14 |
| Polysiloxane resin solution (parts) | 5 | 5 | 5 | 5 | 5 | 5 | 5 |
| Silanol-terminated polydimethylsiloxanes, 2,000 centistokes (parts) | - | - | - | - | - | - | 5 |
| ℓ-(2-aminoethyl)aminopropyltrimethoxysilane (parts) | 5 | 5 | - | - | - | 5 | 5 |
| ℓ-aminopropyltriethoxysilane (parts) | - | - | 5 | - | - | - | - |
| ℓ[2-(2-aminoethyl)aminoethyl] aminopropyltrimethoxysilane (parts) | - | - | - | 5 | - | - | - |
| ℓ-mercaptopropyltrimethoxysilane (parts) | - | - | - | - | 5 | - | - |
| Tetra-n-butyl titanate (parts) | - | 5 | 5 | 5 | 5 | - | 5 |
| Titanium diisopropylbis(acetylacetate) (parts) | 5 | - | - | - | - | - | - |
| Dibutyltitanium dilaurate (parts) | - | - | - | - | - | 0.5 | - |
| Isopropyl alcohol (parts) | 40 | 40 | 40 | 40 | 40 | 40 | 40 |
| N-hexane (parts) | 45 | 45 | 45 | 45 | 45 | 49.5 | 45 |

TABLE IV

| | | Composition Number | | | | | | |
|---|---|---|---|---|---|---|---|---|
| Adherend | | 8 | 9 | 10 | 11 | 12 | 13 | 14 |
| Fluororesin-coated steel plate | Initial adhesion | + | + | + | + | + | + | + |
| | Water-resistant adhesion | + | + | + | + | x | x | x |
| Heat-reflective glass | Initial adhesion | + | + | + | + | + | + | + |
| | Water-resistant adhesion | + | + | + | + | x | Δ | x |
| + : complete adhesion<br>Δ : partial exfoliation or peeling<br>x : peeling over entire surface | | | | | | | | |

## Claims

1. A primer composition comprising

(A) 100 weight parts organopolysiloxane resin containing silicon-bonded hydroxyl or alkoxy, as represented by the following average unit formula

$R^1_aSiO_{(4-a-b)/2}(OR^2)_b$

wherein $R^1$ is a monovalent hydrocarbon group, $R^2$ is the hydrogen atom or an alkyl group, $\underline{a}$ = 0.8 to 1.8, and $\underline{b}$ has a value such that each molecule contains at least one silicon-bonded hydroxyl group or alkoxy group,

(B) 20 to 400 weight parts amino group-containing silane as represented by the following general formula

$$R^3\overset{R^1_c}{\overset{|}{Si}}X_{3-c}$$

wherein $R^3$ is a monovalent hydrocarbon group containing at least one amino group, $R^1$ is as defined above, X represents a hydrolyzable group, and $\underline{c}$ is 1 or 2, or partial hydrolyzate thereof,

(C) 20 to 400 weight parts organotitanate ester, and

(D) a quantity of organic solvent.

2. The primer composition according to claim 1 in which component (A) consists essentially of $R^1_3SiO_{1/2}$ units and $SiO_{4/2}$ units.

3. The primer composition according to claim 1 in which component (A) consists essentially of $R^1_2SiO_{2/2}$ units and $R^1SiO_{3/2}$ units.

4. The primer composition according to claim 1 further comprising methyltrimethoxysilane.

5. An article comprising an adherend with a surface having bonded thereto an air dried primer layer obtained from a primer composition comprising

(A) 100 weight parts organopolysiloxane resin containing silicon-bonded hydroxyl or alkoxy, as represented by the following average unit formula

$R^1_aSiO_{(4-a-b)/2}(OR^2)_b$

wherein $R^1$ is a monovalent hydrocarbon group, $R^2$ is the hydrogen atom or an alkyl group, $\underline{a}$ = 0.8 to 1.8, and $\underline{b}$ has a value such that each molecule contains at least one silicon-bonded hydroxyl group or alkoxy group,

(B) 20 to 400 weight parts amino group-containing silane as represented by the following general formula

$$R^3\overset{R^1_c}{\overset{|}{Si}}X_{3-c}$$

wherein $R^3$ is a monovalent hydrocarbon group containing at least one amino group, $R^1$ is as defined above, X represents a hydrolyzable group, and c is 1 or 2, or partial hydrolyzate thereof,

(C) 20 to 400 weight parts organotitanate ester, and

(D) a quantity of organic solvent and having bonded to the air dried primer layer a layer of cured room temperature vulcanizable silicone rubber.

European Patent Office

# EUROPEAN SEARCH REPORT

Application number

EP 90103249.0

## DOCUMENTS CONSIDERED TO BE RELEVANT

| Category | Citation of document with indication, where appropriate, of relevant passages | Relevant to claim | CLASSIFICATION OF THE APPLICATION (Int Cl⁵) |
|---|---|---|---|
| X | DERWENT ACCESSION, no. 83-805 447, Questel Telesystems (WPIL) DERWENT PUBLICATIONS LTD., London * Abstract * & JP-A-58 162 660 (TORAY SILICONE KK) -- | 1,4,5 | C 09 J 183/04<br>C 09 D 183/04<br>C 08 L 83/04<br>B 32 B 7/12 |
| D,A | DERWENT ACCESSION, no. 80-44 327 C, Questel Telesystems (WPI), DERWENT PUBLICATIONS LTD., London * Abstract * & JP-A-55 062 960 (TOSHIBA SILICONE KK) ---- | 1,4,5 | |

TECHNICAL FIELDS SEARCHED (Int Cl⁵)

C 09 J
C 09 D
C 08 L
B 32 B

The present search report has been drawn up for all claims

| Place of search | Date of completion of the search | Examiner |
|---|---|---|
| VIENNA | 26-04-1990 | BÖHM |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82